# EUROPEAN PATENT APPLICATION

(11) **EP 4 621 440 A1**
(43) Date of publication of application: **24.09.2025**
(21) Application number: 23891260.4
(22) Date of filing: 17.10.2023
(51) Int. Cl.: G01S 13/60

(54) **RAILWAY VEHICLE SPEED DETECTION DEVICE AND RAILWAY VEHICLE SPEED DETECTION METHOD**

(30) Priority: 16.11.2022 JP 2022183486
(71) Applicant: Hitachi, Ltd., Tokyo 100-8280 (JP)
(72) Inventor: AKAMINE, Yukinori, Tokyo 100-8280 (JP); NAGAISHI, Hideyuki, Tokyo 100-8280 (JP); NAKAO, Miyu, Tokyo 100-8280 (JP); ARIMA, Masanori, Tokyo 100-8280 (JP); HAYASHI, Masaki, Tokyo 100-8280 (JP); SHIMADA, Ikuo, Tokyo 100-8280 (JP)
(74) Representative: MERH-IP Matias Erny Reichl Hoffmann Patentanwälte PartG mbB
(86) International application number: PCT/JP2023/037517
(87) International publication number: WO 2024/106103

(57) **Abstract**

It is necessary to downsize an antenna required for railway vehicle speed detection using millimeter waves and avoid degraded speed detection accuracy due to vehicle vibrations and multiple reflections occurring at the bottom of the vehicle. For this purpose, a railway vehicle speed detection device includes a transmission portion to transmit a chirp signal whose frequency changes over time; a reception portion to receive the chirp signal, as a reception signal, reflected from a target; and a digital processing portion to perform a Fourier transform on the reception signal received by the reception portion and calculate a distance to the target and the Doppler velocity of the target. The transmission portion and the reception portion are placed at the bottom of the railway vehicle and are located directly above a rail. The digital processing portion not only equates a Doppler velocity for the rail as a target with the highest Doppler velocity, which is included in Doppler velocities for the targets positioned at equal distances calculated to the targets and corresponds to the reception signal indicating the peak intensity out of reception signals from the targets but also calculates a vehicle speed of the railway vehicle from the Doppler velocity for the rail.

## Description

### Technical Field

The present invention relates to a speed detection device and a speed detection method for railway vehicles using millimeter waves.

### Background Art

Safe and accurate timetable-based operations are important for railway enterprises. Safe operations essentially require monitoring vehicle speeds and give particular importance to monitoring vehicle speeds when stopping at platforms or making a curve turn. In urban areas, timetables are becoming increasingly complicated, also making it important to monitor vehicle speeds for accurate timetable-based operations. Accurate vehicle speed information is required to detect vehicle positions because no GPS information is available inside tunnels or subways.

As a conventional technology generally used to detect a railway vehicle's speed, a tachometer generator attached to the wheel measures the wheel rotation speed and calculates the speed from the wheel rotation speed. The problem is that the method of using the tachometer generator may not accurately detect speeds due to a wheel spin.

In recent years, a speed detection method using millimeter waves has been developed to avoid the effects of wheel spin and accurately detect the speeds.

As a speed detection device using millimeter waves, there is a known method of emitting a millimeter-wave sine wave from a speed detection device installed on a vehicle to the rail and detecting the speed from the Doppler shift amount of the sine wave reflected from the rail. This method changes the Doppler shift amount depending on the angles of the millimeter wave irradiated to the rail from the speed detection device. Accurate speed detection requires irradiating the millimeter wave at the designed known irradiation angle within a narrow-angle range.

Patent Literature 1 proposes an antenna that generates a narrow-angle beam for irradiation within a narrow-angle range. To provide this narrow-angle beam, a patch antenna is formed on a substrate and a lens antenna is placed over it.

Patent Literature 2 discloses a technology to avoid the phenomenon that causes an irradiation angle to differ from the design value due to vehicle vibration. Two types of millimeter wave irradiation portions are used to form two different irradiation angles, thereby detecting vibration and canceling the error in the irradiation angles due to vibration.

Patent Literature 3 discloses a speed detection device provided on the bottom of a vehicle causes a phenomenon that disables accurate detection of speeds due to the effect of multiple reflections occurring between the bottom of the vehicle and the rail or ground. To avoid this phenomenon, Patent Literature 3 provides a reflection control member on the bottom (floor) of the vehicle to alleviate the effect of multiple reflections.

### Citation List

### Patent Literature

Patent Literature 1: Japanese Unexamined Patent Application Publication No. 2015-226297
Patent Literature 2: International Publication No. WO 2018/163638
Patent Literature 3: Japanese Unexamined Patent Application Publication No. 2017-15474

### Summary of Invention

### Technical Problem

The conventional technologies described in the above-described Patent Literature include the following problems.

The lens antenna described in Patent Literature 1 needs to be large-sized to generate a narrow-angle beam.

The speed measurement device described in Patent Literature 2 requires providing the vehicle with two speed-detection devices.

The reflection control member described in Patent Literature 3 requires optimizing the position of providing the reflection control member according to the shape of the bottom of the vehicle.

The present invention aims to provide technology that downsize a narrow-angle beam antenna required for a railway vehicle speed detection device using millimeter waves and avoids degraded speed detection accuracy due to vehicle vibrations and multiple reflections occurring at the bottom of the vehicle.

### Solution to Problem

To solve the above-described problem, a representative aspect of a railway vehicle speed detection device according to the present invention includes a transmission portion to transmit a chirp signal whose frequency changes over time; a reception portion to receive the chirp signal, as a reception signal, reflected from a target; and a digital processing portion to perform a Fourier transform on the reception signal received by the reception portion and calculate a distance to the target and the Doppler velocity of the target. The transmission portion and the reception portion are placed at the bottom of the railway vehicle and are located directly above a rail. The digital processing portion not only equates a Doppler velocity for the rail as a target with the highest Doppler velocity, which is included in Doppler velocities for the targets positioned at equal distances calculated to the targets and corresponds to the reception signal indicating the peak intensity out of reception signals from the targets but also calculates a vehicle speed of the railway vehicle from the Doppler velocity for the rail.

### Advantageous Effects of Invention

The present invention uses a wide-angle antenna to detect vehicle speeds at multiple distances, making it possible to downsize the antenna and avoid the influence of vehicle vibration in the pitch direction. No digital process is applied to long distances where multiple reflections are received, making it possible to avoid degradation of the speed detection accuracy due to multiple reflections.

Objects, configurations, and effects other than the above will be apparent from the description of the following invention.

### Brief Description of Drawings

FIG. 1 is a block diagram illustrating the configuration of a railway vehicle speed detection device according to an embodiment of the present invention.
FIG. 2 is a diagram illustrating a vehicle speed detection method and the installation of the railway vehicle speed detection device.
FIG. 3 is a diagram illustrating the characteristics of a Doppler velocity distribution at equal distances from the railway vehicle speed detection device.
FIG. 4 is a diagram illustrating the Doppler velocity distribution characteristics illustrated in FIG. 3 superimposed at intervals of specified distance traveled by the vehicle.
FIG. 5 is a diagram illustrating the relationship between the Doppler velocity and the distance to the rail from the vehicle speed detection device installed at a height of 20 cm.

### Description of Embodiments

The description below explains a representative embodiment of the present invention by reference to the accompanying drawings. The present invention is not limited to the embodiment. The mutually corresponding parts in the drawings are designated by the same reference numerals.

### First Embodiment

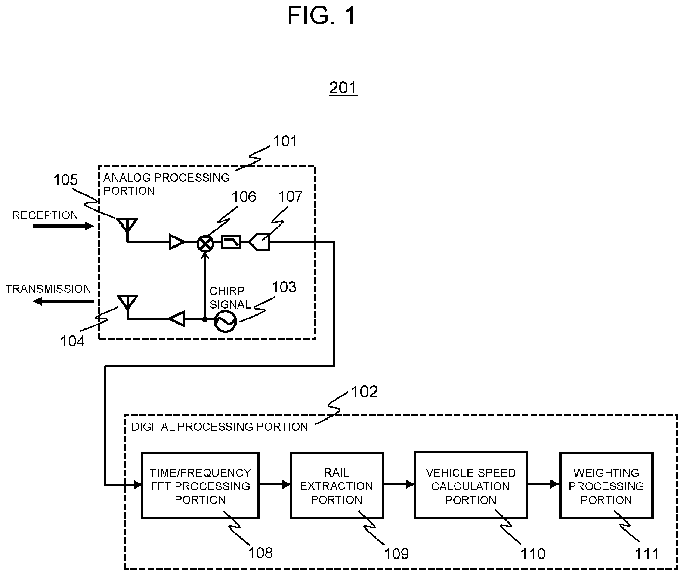

FIG. 1 is a block diagram illustrating the configuration of a railway vehicle speed detection device (201) according to an embodiment of the present invention.

A railway vehicle speed detection device 201 includes two blocks: an analog processing portion (101) and a digital processing portion (102).

The analog processing portion (101) is composed of a synthesizer (103), a transmitting antenna (104), a receiving antenna (105), a mixer (106), and an A/D converter (107).

The synthesizer (103) generates a millimeter waveband chirp signal whose frequency is linearly transitioned over time. This millimeter waveband chirp signal is transmitted from the transmitting antenna (104).

The transmitted signal reflects off a target object and part of the reflected wave returns to the receiving antenna (105) and is received.

The reflected wave signal received by the receiving antenna (105) is down-converted by the mixer (106) as a frequency converter. At this time, a signal from the synthesizer (103) is input as a local signal of the mixer (106). Then, the mixer (106) outputs a time difference between the transmitted signal and the received signal, namely, a frequency corresponding to the distance to the target object.

The output signal from the mixer (106) is converted into a digital signal by the A/D converter (107) and transmitted to the digital processing portion (102).

The digital processing portion (102) is composed of a time/frequency FFT processing portion (108), a rail extraction portion (109), a vehicle speed calculation portion (110), and a weighting processing portion (111).

The digital processing portion (102) as the first stage of the time/frequency FFT processing portion (108) applies time FFT and frequency FFT to the received signal. Namely, the frequency FFT calculates distance R (202), and the time FFT calculates Doppler velocity Vdpr (203).

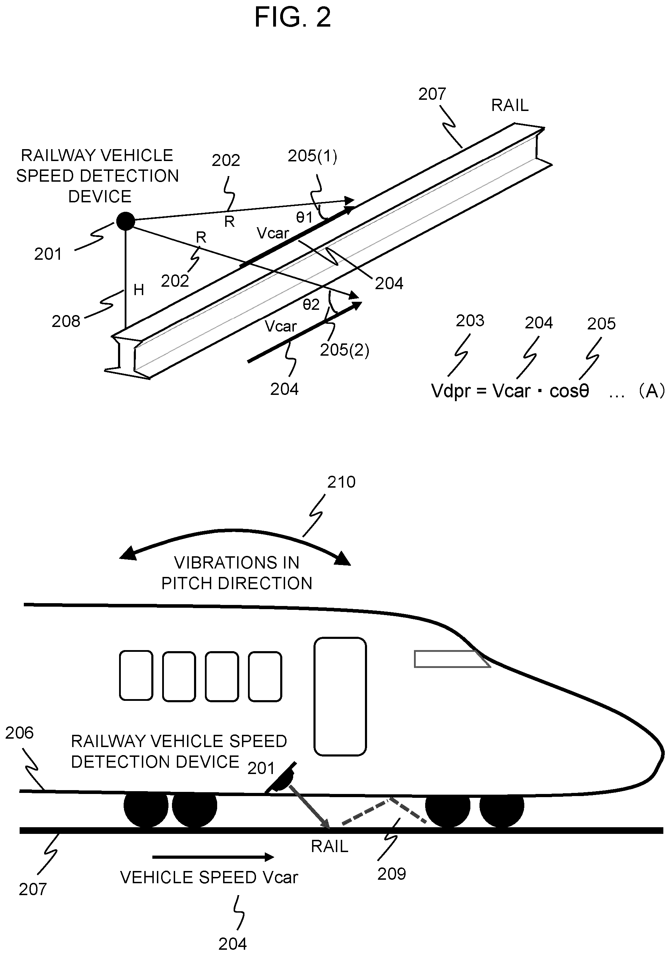

FIG. 2 is a diagram illustrating a vehicle speed detection method and the installation of the railway vehicle speed detection device (201).

As illustrated in the lower part of FIG. 2, the railway vehicle speed detection device (201) is assumed to be installed at the bottom (206) of the railway vehicle and directly above the rail (207). At least the transmitting antenna (104) and the receiving antenna (105) need to be installed at the bottom (206) of the railway vehicle and directly above the rail (207). However, all components constituting the railway vehicle speed detection device (201) are not necessarily installed at the bottom (206) of the railway vehicle and directly above the rail (207).

Suppose Vcar (204) denotes the vehicle speed and θ (205) denotes the angle (irradiation angle) between the irradiation vector from the railway vehicle speed detection device (201) to the target and the speed vector of the vehicle speed Vcar (204). Then, equation (A) below expresses the Doppler velocity Vdpr (203) calculated by the time FFT. Vdpr = Vcar·cos θ ... (A)

As is clear from equation (A), the value of the Doppler velocity Vdpr (203) calculated by the time FFT varies with the irradiation angle θ (205). A decrease in the value of θ increases the value of the calculated Doppler velocity Vdpr (203) to approach the vehicle speed Vcar (204).

The railway vehicle speed detection device (201) is installed directly above the rail (207), and the rail (207) is generally raised in the height direction from the ground. Therefore, θ (205) against the rail (207) is the smallest among targets having the same distance R (202) calculated by the frequency FFT.

For example, the upper part of FIG. 2 illustrates angle θ1 (205(1)) against the rail (207) and angle θ2 (205(2)) against the ground and sleepers at equal distance R (202) from the railway vehicle speed detection device (201). The magnitude relationship between both indicates that θ1 (205(1)) is smaller than θ2 (205(2)) (θ2>θ1).

In a typical railway environment, there are no targets in the range causing angle θ smaller than the angle referring to the rail (207) at the same distance R. The Doppler velocity Vdpr (203) calculated on the rail (207) is maximized within the equal distance R (202).

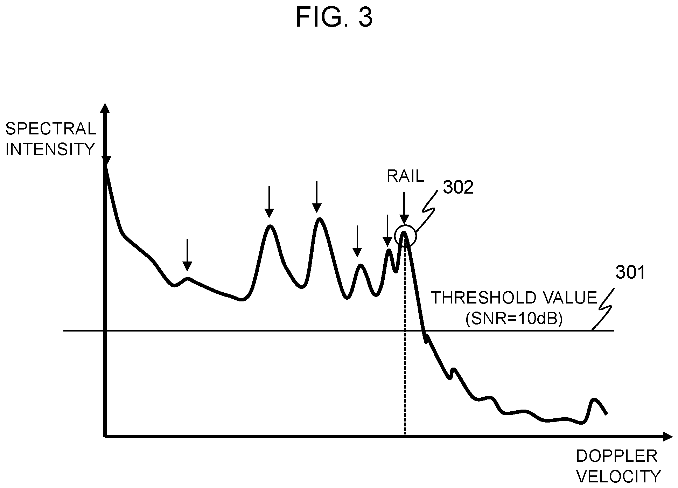

FIG. 3 is a diagram illustrating the characteristics of the Doppler velocity distribution at equal distances R from the railway vehicle speed detection device (201). The result of processes from the time/frequency FFT processing portion represents the Doppler velocity on the horizontal axis and the spectral intensity on the vertical axis.

The characteristic illustrated in FIG. 3 includes the Doppler velocity distribution range, which is considered to include no targets. The rail extraction portion (109) treats this distribution range as noise. For example, an SN ratio (SNR) of 10 dB is defined as a threshold (301). It is determined that a target exists at the spectral intensity causing the SN ratio (SNR) to be higher than the threshold.

The rail (207), made of metal, indicates a high spectral intensity causing the reflection of the millimeter wave to be received intensely. Therefore, the rail extraction portion (109) identifies the rail, namely, the target indicating the peak value (302 in FIG. 3) corresponding to the highest Doppler velocity among the peak values (locations indicated by the downward arrows in FIG. 3) in the region of the spectral intensity higher than the threshold.

The rail (207) makes it known the distance R (202) and the height H (208) from the surface of the rail (207) to the railway vehicle speed detection device (201) installed at the bottom (206) of the railway vehicle. Therefore, the angle θ (205) can be found and is known.

The vehicle speed calculation portion (110) divides the rail Doppler velocity Vdpr (203) by cos θ based on the previous equation (A) to calculate the vehicle speed Vcar (204).

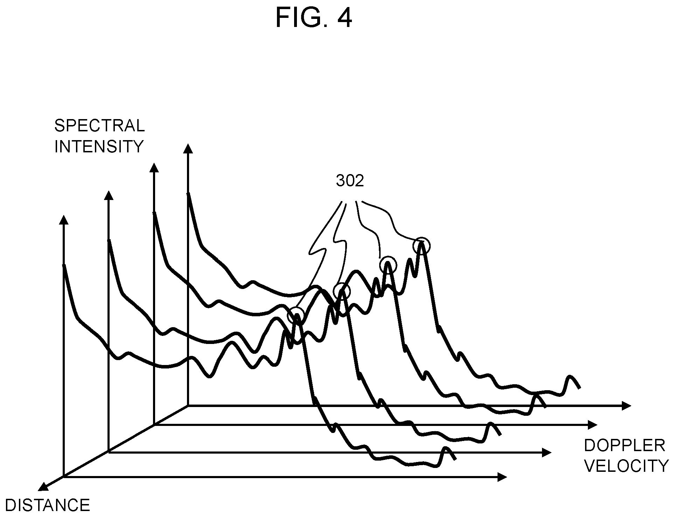

FIG. 4 is a diagram illustrating the Doppler velocity distribution characteristics illustrated in FIG. 3 superimposed at intervals of specified distance traveled by the vehicle.

The vehicle speed Vcar (204) can be calculated for the distance R found by the frequency FFT. As illustrated in FIG. 4, the detection accuracy can be improved by averaging the vehicle speed Vcar (204) calculated for each specified distance traveled by the vehicle.

The resolution of the distance R is determined by the bandwidth of the chirp signal generated by the synthesizer (103) and increases as the bandwidth widens. For example, the resolution of distance R is 20 cm corresponding to the chirp signal bandwidth of 0.75 GHz, and 6 cm corresponding to the chirp signal bandwidth of 2.5 GHz. The detection accuracy of the vehicle speed Vcar (204) can be improved since the distance resolution increases as the bandwidth widens.

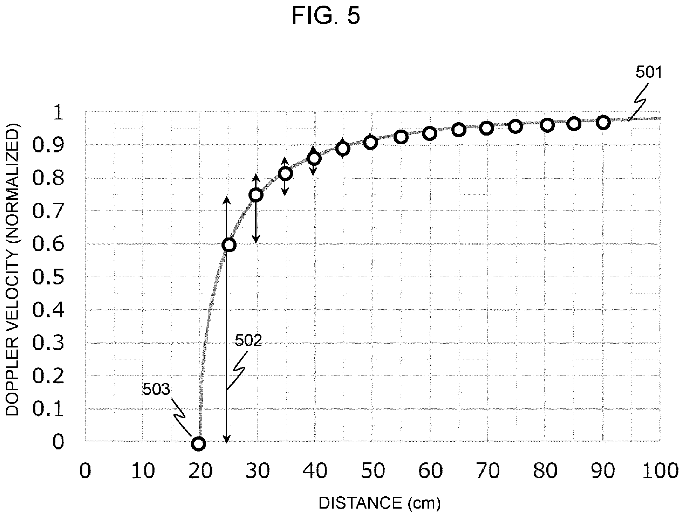

FIG. 5 illustrates the Doppler velocity characteristics of the rail (207) relative to distances assuming that the distance resolution is 5 cm (corresponding to the chirp signal bandwidth of 3 GHz) and the height H (208) from the surface of the rail (207) to the railway vehicle speed detection device (201) is 20 cm. The vertical axis represents the value acquired by normalizing the Doppler velocity Vdpr (203) by the vehicle speed Vcar (204), and the horizontal axis represents the distance (cm).

The solid line (501) represents the theoretical value of the Doppler velocity Vdpr (203). Under ideal conditions, the Doppler velocity Vdpr (203) should be detected on this solid line. A white circle (503) corresponds to the Doppler velocity Vdpr (203) detected at 5 cm intervals as the distance resolution. Due to the nature of the distance resolution, each white circle contains the Doppler velocity components within the range of an arrow line (502) illustrated in FIG. 5.

The detected Doppler velocity indicates a large spread or dispersion degree (the range of the arrow line (502)) near the minimum distance of 20 cm and indicates a small spread (dispersion degree) of the detected Doppler velocity at a longer distance. The received signal strength of the irradiated millimeter wave increases at short distances, decreasing the fluctuation in the detection accuracy of the vehicle speed due to noise.

Considering these conditions, the weighting is found by multiplying the received signal strength by the inverse of the Doppler velocity spread (dispersion). This weighting process is applied to the vehicle speed calculated for each specified distance traveled by the vehicle, and then an averaging process is performed. The weighting processing portion (111) in the digital processing portion (102) illustrated in FIG. 1 performs these processes. This makes it possible to calculate an accurate vehicle speed.

The digital processing portion (102) of the railway vehicle speed detection device (201) allows the time/frequency FFT processing portion (108) to find the distance R (202) and the Doppler velocity Vdpr (203) and then allows the rail extraction portion (109) to extract the rail by extracting the highest peak (302) from the Doppler velocity distribution at equal distances R.

Then, a vehicle speed detection portion (110) calculates the vehicle speed based on the rail irradiation angle θ at each distance. Then, the weighting processing portion (111) performs the weighting process based on the received signal strength and the Doppler velocity spread (502) and performs the averaging process. These processes can accurately calculate the vehicle speed Vcar (204).

The present invention does not need a narrow-angle beam antenna because of the condition that a millimeter waveband chirp signal is irradiated to the rail over a relatively wide distance range. However, the ground or sleepers outside the rail may be noise sources. It may be more favorable to use an antenna that provides a wide angle in the rail direction and a relatively narrow angle in the vertical direction.

The antenna providing a wide angle in the rail direction causes no effect of vibration (210) in the pitch direction of the vehicle, as illustrated in the lower part of FIG. 2. If the railway vehicle generates vibration in the height direction, it is possible to estimate a horizontal-axis offset of the solid line (501) illustrated in FIG. 5 from the white circle (503) as the Doppler velocity detected for each distance and thereby detect the vibration in the height direction and avoid its effect on the speed detection.

As illustrated in the lower part of FIG. 2, it is possible to avoid the effect of multiple reflections (209) occurring between the railway vehicle bottom (206) and the ground by limiting the distance R such as eliminating processes after the frequency FFT in the digital processing portion (102) for the long distance R calculated by the frequency FFT.

The above-described embodiment includes at least the following technical matters.

### <Technical matter 1>

A railway vehicle speed detection device includes a transmission portion to transmit a chirp signal whose frequency changes over time; a reception portion to receive the chirp signal, as a reception signal, reflected from a target; and a digital processing portion to perform a Fourier transform on the reception signal received by the reception portion and calculate a distance to the target and the Doppler velocity of the target. The transmission portion and the reception portion are placed at the bottom of the railway vehicle and are located directly above a rail. The digital processing portion not only equates a Doppler velocity for the rail as a target with the highest Doppler velocity, which is included in Doppler velocities for the targets positioned at equal distances calculated to the targets and corresponds to the reception signal indicating the peak intensity out of reception signals from the targets but also calculates a vehicle speed of the railway vehicle from the Doppler velocity for the rail.

### <Technical matter 2>

In the railway vehicle speed detection device according to Technical matter 1, the digital processing portion calculates the vehicle speed of the railway vehicle by calculating an estimated vehicle speed of the railway vehicle from an irradiation angle of the chirp signal transmitted to the rail and the Doppler velocity for the rail at each specified distance traveled by the railway vehicle, weighting the estimated vehicle speed using a Doppler velocity dispersion degree occurring at each of the specified distances and the intensity of the reception signal, and performing an averaging process.

### <Technical matter 3>

In the railway vehicle speed detection device according to Technical matter 1 or 2, the reception portion includes an antenna having a wide angle in the direction of the rail.

### <Technical matter 4>

In the railway vehicle speed detection device according to any one of Technical matters 1 through 3, the digital processing portion does not perform a process to calculate the estimated vehicle speed for a long distance where the reception signal includes a signal corresponding to multiple reflections occurring between the bottom of the railway vehicle and the ground.

### <Technical matter 5>

In a railway vehicle speed detection device according to any one of Technical matters 1 to 4, the chirp signal transmitted by the transmission portion is a millimeter-waveband chirp signal.

### <Technical matter 6>

Technical matter 6 is a railway vehicle equipped with the railway vehicle speed detection device according to any one of Technical matters 1 through 5.

### <Technical matter 7>

A railway vehicle speed detection method transmits a chirp signal whose frequency changes over time from an antenna placed at the bottom of the railway vehicle directly above a rail and receives, as a reception signal, the chirp signal reflecting off a target; applies Fourier transform to the reception signal to calculate a distance to the target and a Doppler velocity for the target; equates a Doppler velocity for the rail as a target with the highest Doppler velocity, which is included in Doppler velocities for the targets positioned at equal distances calculated to the targets and corresponds to the reception signal indicating the peak intensity; and calculates a vehicle speed of the railway vehicle from the Doppler velocity for the rail as a target.

### <Technical matter 8>

In the railway vehicle speed detection method according to Technical matter 7, a method of calculating vehicle speeds of the railway vehicle calculates an estimated vehicle speed of the railway vehicle from an irradiation angle of the chirp signal transmitted to the rail and a Doppler velocity for the rail at each specified distance traveled by the railway vehicle, weights the estimated vehicle speed using a Doppler velocity dispersion degree occurring at each of the specified distances and the intensity of the reception signal, and performs an averaging process.

### <Technical matter 9>

The railway vehicle speed detection method according to Technical matter 8 does not perform a process to calculate the estimated vehicle speed for a long distance where the reception signal includes a signal corresponding to multiple reflections occurring between the bottom of the railway vehicle and the ground.

While there has been described the embodiment of the present invention, the invention is not limited to the above-described embodiment and may be variously modified without departing from the scope of the invention.

### List of Reference Signs

- 101:: analog processing portion
- 102:: digital processing portion
- 103:: synthesizer
- 104:: transmitting antenna
- 105:: receiving antenna
- 106:: mixer
- 107:: A/D converter
- 108:: time/frequency FFT processing portion
- 109:: rail extraction portion (extracting the highest peak)
- 110:: vehicle speed calculation portion
- 111:: weighting processing portion
- 201:: railway vehicle speed detection device
- 202:: distance (R)
- 203:: Doppler velocity (Vdpr)
- 204:: vehicle speed (Vcar)
- 205:: angle (θ) between irradiation vector and vehicle speed vector
- 206:: bottom of railway vehicle
- 207:: rail
- 208:: height (H) from rail surface to railway vehicle speed detection device
- 209:: multiple reflections at bottom of vehicle
- 210:: vibration in pitch direction
- 301:: threshold (determining presence of target)
- 302:: peak (indicating maximum speed)
- 501:: solid line (theoretical value indicating relationship between distance to rail and Doppler velocity)
- 502:: arrow line (indicating spread (dispersion degree) of detected Doppler velocity)
- 503:: white circle (indicating detected Doppler velocity)

## Claims

1. A railway vehicle speed detection device comprising:
a transmission portion that transmits a chirp signal whose frequency changes over time;
a reception portion that receives the chirp signal, as a reception signal, reflected from a target; and
a digital processing portion that performs a Fourier transform on the reception signal received by the reception portion and calculates a distance to the target and the Doppler velocity of the target,
wherein the transmission portion and the reception portion are placed at the bottom of the railway vehicle and are located directly above a rail; and
wherein the digital processing portion not only equates a Doppler velocity for the rail as a target with the highest Doppler velocity, which is included in Doppler velocities for the targets positioned at equal distances calculated to the targets and corresponds to the reception signal indicating the peak intensity out of reception signals from the targets but also calculates a vehicle speed of the railway vehicle from the Doppler velocity for the rail.

2. The railway vehicle speed detection device according to claim 1,
wherein the digital processing portion calculates the vehicle speed of the railway vehicle by
calculating an estimated vehicle speed of the railway vehicle from an irradiation angle of the chirp signal transmitted to the rail and the Doppler velocity for the rail at each specified distance traveled by the railway vehicle,
weighting the estimated vehicle speed using a Doppler velocity dispersion degree occurring at each of the specified distances and the intensity of the reception signal, and performing an averaging process.

3. The railway vehicle speed detection device according to claim 1,
wherein the reception portion includes an antenna having a wide angle in the direction of the rail.

4. The railway vehicle speed detection device according to claim 2,
wherein the digital processing portion does not perform a process to calculate the estimated vehicle speed for a long distance where the reception signal includes a signal corresponding to a plurality of reflections occurring between the bottom of the railway vehicle and the ground.

5. A railway vehicle speed detection device according to any one of claims 1 to 4,
wherein the chirp signal transmitted by the transmission portion is a millimeter-waveband chirp signal.

6. A railway vehicle equipped with the railway vehicle speed detection device according to claim 5.

7. A railway vehicle speed detection method comprising:
transmitting a chirp signal whose frequency changes over time from an antenna placed at the bottom of the railway vehicle directly above a rail receiving, as a reception signal, the chirp signal reflecting off a target;
applying Fourier transform to the reception signal to calculate a distance to the target and a Doppler velocity for the target;
equating a Doppler velocity for the rail as a target with the highest Doppler velocity, which is included in Doppler velocities for the targets positioned at equal distances calculated to the targets and corresponds to the reception signal indicating the peak intensity out of reception signals from the targets; and
calculating a vehicle speed of the railway vehicle from the Doppler velocity for the rail.

8. The railway vehicle speed detection method according to claim 7,
wherein a method of calculating vehicle speeds of the railway vehicle
calculates an estimated vehicle speed of the railway vehicle from an irradiation angle of the chirp signal transmitted to the rail and a Doppler velocity for the rail at each specified distance traveled by the railway vehicle,
weights the estimated vehicle speed using a Doppler velocity dispersion degree occurring at each of the specified distances and the intensity of the reception signal, and performs an averaging process.

9. The railway vehicle speed detection method according to claim 8, comprising:
not performing a process to calculate the estimated vehicle speed for a long distance where the reception signal includes a signal corresponding to a plurality of reflections occurring between the bottom of the railway vehicle and the ground.
